# EUROPÄISCHE PATENTANMELDUNG

(11) **EP 1 696 214 A1**
(43) Veröffentlichungstag der Anmeldung: **30.08.2006**
(21) Anmeldenummer: 05025644.5
(22) Anmeldetag: 24.11.2005
(51) Int. Cl.: G01F 1/58, G01F 15/18, F16L 47/03, F16L 41/00, B29C 65/34

(54) **Durchflußmeßgerät und Verfahren zur Installation eines Durchflußmeßgeräts**

(30) Priorität: 28.02.2005 DE 102005009675
(71) Anmelder: Krohne AG, 4019 Basel (CH)
(72) Erfinder: Herremans, Pieter, 3381 LH Giessenburg (NL); Heijnsdijk, Alexander Marnix, 3356 BW Papendrecht (NL)
(74) Vertreter: Gesthuysen, von Rohr & Eggert

(57) **Zusammenfassung**

Die Erfindung betrifft ein Durchflußmeßgerät sowie ein Verfahren zur Installation eines Durchflußmeßgeräts. Das erfindungsgemäße Durchflußmeßgerät dient zur Durchflußmessung eines strömenden Mediums und weist ein Meßrohr (1) aus Kunststoff zum Führen des Mediums sowie eine Verbindungsvorrichtung (6) zum Verbinden eines Endes (3) des Meßrohrs (1) mit einem Ende einer Rohrleitung (2) aus Kunststoff auf. Erfindungsgemäß ist vorgesehen, daß die Verbindungsvorrichtung (6) eine Heizeinrichtung (5) aufweist, mittels derer das Ende (3) des Meßrohrs (1) oder/und das Ende der Rohrleitung (2) angeschmolzen werden kann bzw. können, so daß zwischen dem Meßrohr (1) und der Rohrleitung (2) eine Schmelzverbindung erzielbar ist. Auf diese Weise kann das Meßrohr (1) des Durchflußmeßgeräts einfach und auf sichere Weise in einem Rohrleitungssystem installiert werden.

## Beschreibung

Die Erfindung betrifft ein Durchflußmeßgerät, zur Durchflußmessung eines strömenden Mediums, mit einem Meßrohr aus Kunststoff zum Führen des Mediums und einer Verbindungseinrichtung zum Verbinden eines Endes des Meßrohrs mit einem Ende einer Rohrleitung aus Kunststoff. Die Erfindung betrifft ferner ein Verfahren zum Verbinden eines Endes eines aus Kunststoff ausgebildeten Meßrohrs eine Durchflußmeßgeräts mit einem Ende einer aus Kunststoff ausgebildeten Rohrleitung.

Durchflußmeßgeräte zur Durchflußmessung eines strömenden Mediums sind in vielfältiger Ausgestaltung bekannt. Die Messung eines Volumenstroms ist dabei z. B. mittels eines magnetisch-induktiven Durchflußmeßgeräts möglich, mit dem die elektromagnetische Induktion von sich durch ein Magnetfeld hindurchbewegenden Ladungsträgern ausgenutzt wird. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektromagnetischen Induktion zur Strömungsgeschwindigkeitsmessung anzuwenden.

Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetspule ein Magnetfeld erzeugt wird, das eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung und der über den Querschnitt des Meßrohrs gemittelten Strömungsgeschwindigkeit des Mediums, d. h. zwischen Meßspannung und Volumenstrom.

Wenigstens im Bereich der Meßelektroden ist es erforderlich, daß der Innenbereich des Meßrohrs elektrisch isolierend ist oder eine elektrisch isolierende Auskleidung aufweist Dazu kann ein entsprechender Einsatz oder eine entsprechende Beschichtung des Meßrohrs verwendet werden. Es ist jedoch auch möglich, das gesamte Meßrohr aus Kunststoff zu fertigen, was die Herstellung vereinfacht.

Magnetisch-induktive Durchflußmeßgeräte, aber auch andere Durchflußmeßgeräte mit Meßrohren aus einem Kunststoff, sollen häufig in derartige Rohrleitungssysteme eingebaut werden, die ebenfalls aus Kunststoff bestehen. Dazu werden häufig geschraubte oder geklemmte Flanschverbindungen verwendet.

Es ist die Aufgabe der Erfindung, ein derartiges Durchflußmeßgerät sowie ein derartiges Verfahren zur Installation eines Durchflußmeßgeräts in einem Rohrleitungssystem anzugeben, mit denen ein Meßrohr aus Kunststoff in einfacher und verläßlicher Weise mit einem ebenfalls aus Kunststoff hergestellten Rohrleitungssystem verbunden werden kann.

Ausgehend von dem eingangs beschriebenen Durchflußmeßgerät ist die zuvor genannte Aufgabe dadurch gelöst, daß die Verbindungsvorrichtung eine Heizeinrichtung aufweist, mittels derer das Ende des Meßrohrs oder/und das Ende der Rohrleitung angeschmolzen werden kann bzw. können, so daß zwischen dem Meßrohr und der Rohrleitung eine Schmelzverbindung erzielbar ist.

Erfindungswesentlich ist also, daß der Einbau des Meßrohrs in das Rohrleitungssystem über eine Schmelzverbindung erfolgt, worunter verstanden wird, daß wenigstens der Kunststoff des Meßrohrs oder der Kunststoff der Rohrleitung angeschmolzen wird, vorzugsweise sowohl der Kunststoff des Meßrohrs als auch der Kunststoff des Rohrleitung angeschmolzen werden, und nachfolgend das Meßrohr und die Rohrleitung im Bereich des Anschmelzens miteinander in Kontakt kommen, so daß nach dem Abkühlen und Aushärten des Kunststoffs eine feste Verbindung zwischen dem Meßrohr und der Rohrleitung erzielt wird, nämlich die sogenannte Schmelzverbindung.

Zuvor ist eine unmittelbare Verbindung zwischen dem Meßrohr und der Rohrleitung beschrieben worden, also eine derartige Verbindung, bei der das Meßrohr und die Rohrleitung direkt miteinander in Kontakt stehen und damit direkt miteinander verbunden sind. Dabei ist gemäß einer bevorzugte Weiterbildung der Erfindung vorgesehen, daß das Meßrohr und die Verbindungsvorrichtung einstückig ausgebildet sind, wobei die Heizeinrichtung vorzugsweise in die Wand des Meßrohrs integriert ist. Zur Installation des Durchflußmeßgeräts wird das Meßrohr mit der Verbindungsvorrichtung auf die Rohrleitung aufgesteckt, und nach Aktivieren der Heizeinrichtung erfolgt das Anschmelzen des Kunststoffs, was schließlich zu der oben beschriebenen Schmelzverbindung führt.

Gemäß einer anderen bevorzugten Weiterbildung ist es jedoch auch möglich, eine mittelbare Verbindung des Meßrohrs mit der Rohrleitung zu erzielen, und zwar dadurch, daß die Verbindungsvorrichtung von dem Meßrohr verschieden ausgebildet ist, das Meßrohr und die Rohrleitung in die Verbindungsvorrichtung eingesteckt werden, ohne daß sie sich berühren, und dann eine jeweilige Schmelzverbindung zwischen dem Meßrohr einerseits und der Verbindungsvorrichtung andererseits sowie zwischen der Rohrleitung einerseits und dem Meßrohr andererseits erzielt wird. Dazu weist die Verbindungsvorrichtung vorzugsweise natürlich auch einen entsprechenden anschmelzbaren Kunststoff auf.

Als Heizeinrichtungen sind eine Vielzahl von Einrichtungen möglich, mit denen der Kunststoff angeschmolzen werden kann. So sind Heizeinrichtungen denkbar, die auf einer exothermen chemischen Reaktion beruhen oder. z. B. ein heißes Medium, wie ein heißes Gas, verwenden. Gemäß einer bevorzugten Weiterbildung der Erfindung ist jedoch vorgesehen, daß als Heizeinrichtung ein Heizdraht vorgesehen ist. Ein derartiger Heizdraht läßt sich auf einfache Weise in der Verbindungsvorrichtung integrieren, nämlich z. B. bei der Ausbildung der Verbindungsvonichtumg als Rohr, in deren Innenwand.

Zur Installation des Durchflußmeßgeräts in dem Rohrleitungssystem muß dann lediglich der Heizdraht elektrisch angeschlossen werden, so daß in Kürze und auf einfachste Weise eine feste Verbindung des Meßrohrs mit der Rohrleitung erzielbar ist.

Als Kunststoffe für das Meßrohr oder/und die Verbindungsvorrichtung sind vorzugsweise Polyethylen oder/und Polypropylen vorgesehen. Die Wahl der möglichen Kunststoffe kann sich dabei insbesondere nach der Art des Kunststoffs des Rohrleitungssystem richten, wobei grundsätzlich alle Kunststoffe verwendbar sind, mit denen sich eine entsprechende Schmelzverbindung erzielen läßt

Ausgehend von dem eingangs beschriebenen Verfahren zum Verbinden eines Endes eines aus Kunststoff ausgebildeten Meßrohrs eines Durchflußmeßgeräts mit einem Ende einer aus Kunststoff ausgebildeten Rohrleitung ist die Weiter oben genannte Aufgabe dadurch gelöst, daß das Meßrohr oder/und die Rohrleitung mittels einer in einer Verbindungsvorrichtung vorgesehenen Heizeinrichtung angeschmolzen wird bzw. werden, so daß zwischen dem Meßrohr und der Rohrleitung eine Schmelzverbindung erzielt wird.

Wie zuvor schon beschrieben kann dabei gemäß einer bevorzugten Weiterbildung des erfindungsgemäßen Verfahrens vorgesehen sein, daß die Schmelzverbindung zwischen dem Meßrohr einerseits und der Rohrleitung andererseits hergestellt wird. Gemäß einer anderen bevorzugten Weiterbildung des erfindungsgemäßen Verfahrens kann jedoch auch vorgesehen sein, daß die Schmelzverbindung zwischen dem Meßrohr und der Rohrleitung einerseits und der Verbindungseinrichtung andererseits hergestellt wird. Wie ebenfalls schon weiter oben beschrieben, ist dabei gemäß einer bevorzugten Weiterbildung der Erfindung vorgesehen, daß die Verbindungseinrichtung auf das Ende der Rohrleitung aufgesteckt wird.

Im einzelnen gibt es nun eine Vielzahl von Möglichkeiten, das erfindungsgemäße Durchflußmeßgerät sowie das erfindungsgemäße Verfahren auszugestalten und weiterzubilden. Dazu wird auf die den unabhängigen Patentansprüchen nachgeordneten Patentansprüche sowie auf die nachfolgende detailliezte Beschreibung bevorzugter Ausführungsbeispiele der Erfindung unter Bezugnahme auf die Zeichnung verwiesen. In der Zeichnung zeigt
- Fig. 1: ein magnetisch-induktives Durchflul3meßgerät gemäß einem bevorzugten Ausführungsbeispiel der Erfindung in einer Seitenansicht,
- Fig. 2: das magnetisch-induktive Durchflußmeßgerät gemäß einem bevorzugten Ausführungsbeispiel der Erfindung im Schnitt und
- Fig. 3: eine verbindungseinrichtung für ein magnetisch-induktives Durchflußmeßgerät gemäß einem anderen bevorzugten Ausführungsbeispiel der Erfindung im Schnitt.

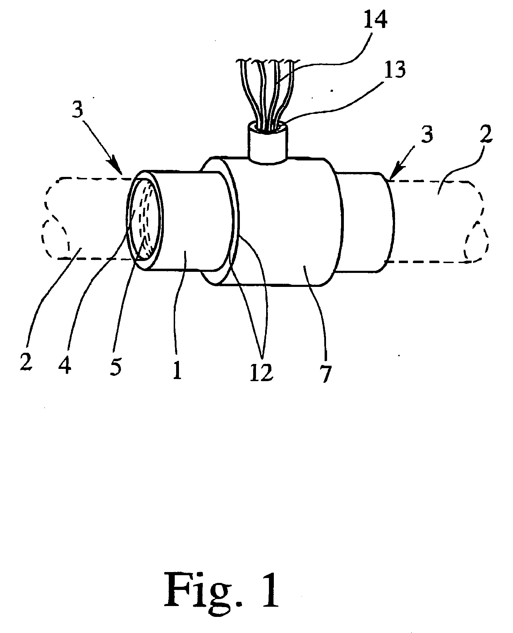

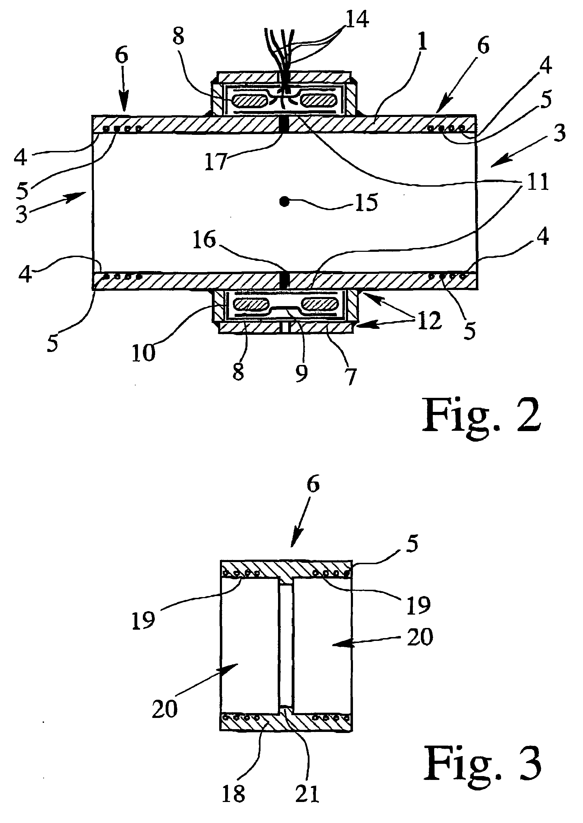

Aus Fig. 1 ist ein magnetisch-induktives Durchflußmeßgerät gemäß einem ersten bevorzugten Ausführungsbeispiel der Erfindung in einer Seitenansicht ersichtlich. Das magnetisch-induktive Durchflußmeßgerät weist ein Meßrohr 1 aus Polyethylen (PE) auf, das mit zwei ebenfalls aus PE bestehenden Rohrleitungen 2 verbunden werden soll. Dazu weist das Meßrohr 1 an seinen beiden Enden 3 in der Innenwand 4 jeweils eine Heizeinrichtung 5 auf, nämlich in Form von in der Innenwand 4 integrierten Heizdrähten. Entsprechendes ist auch aus Fig. 2 ersichtlich, die das magnetisch-induktive Durchflußmeßgerät gemäß dem ersten bevorzugten Ausführungsbeispiel der Erfindung im Schnitt zeigt.

Zur Installation des magnetisch-induktiven Durchflußmeßgeräts gemäß dem ersten bevorzugten Ausführungsbeispiel der Erfindung werden die beiden ebenfalls aus Polyethylen ausgebildeten Rohrleitungen 2 in die Enden 3 des Meßrohrs 1 eingesteckt, und den als Heizdrähten ausgebildeten Heizeinrichtungen 5 in der Innenwand 4 an den Enden 3 des Meßrohrs 1 wird über nicht weiter dargestellte elektrische Anschlüsse ein elektrischer Strom zugeführt. Damit wird sowohl der Kunststoff im Bereich der Innenwand 4 an den Enden 3 des Meßrohrs 1 angeschmolzen als auch der Kunststoff der Rohrleitungen 2. Nach Abkühlen und Aushärten des Kunststoffs wird damit zwischen dem Meßrohr 1 und den Rohrleitungen 2 jeweils eine Schmelzverbindung erzielt, die sowohl sehr haltbar als auch flüssigkeits- und gasdicht ist. Bei diesem ersten bevorzugten Ausführungsbeispiel ist zum Anschluß der Rohrleitungen 2 an das Meßrohr 1 also eine einstückig mit dem Meßrohr 1 ausgebildete Verbindungsvorrichtungen 6 vorgesehen.

Im übrigen ist das magnetisch-induktive Durchflußmeßgerät gemäß dem ersten bevorzugten Ausführungsbeispiel der Erfindung wie folgt ausgebildet: Auf das Meßrohr 1 ist ein Außengehäuse 7 aufgesetzt, das eine Magnetspule 8, den Magnetkreis 9 und eine magnetische Abschirmung 10 sowie eine elektrische Abschirmung 11 aufweist. Das Außengehäuse 7 ist ebenfalls aus Polyethylen ausgebildet und ist vorliegend mittels Verschweißungen 12 zusammengesetzt bzw. mit dem Meßrohr 1 verbunden. Alternativ kann dies auch mittels Verklebungen realisiert sein.

Über eine Öffnung 13 in dem Außengehäuse 7 sind dem magnetisch-induktiven Durchflußmeßgerät gemäß dem ersten bevorzugten Ausführungsbeispiel der Erfindung elektrische Leitungen 14 zugeführt, die zur Versorgung der Magnetspulen 8 dienen bzw. zu Elektroden 15, 16, 17 fuhren. Die Elektroden 15, 16, 17 sind in die Wand des Meßrohrs 1 eingeschmolzen, und zwar derart, daß sie in galvanisch leitenden Kontakt mit einem in dem Meßrohr 1 geführten Medium kommen können. Während die Elektrode 15 und eine dieser gegenüberliegende, nicht weiter dargestellte Elektrode dem Abgriff der in dem in dem Meßrohr 1 geführten Medium induzierten Spannung dienen, dient die Elektrode 16 als Erdungselektrode und die Elektrode 17 zur Erfassung eines nicht vollständig gefüllten Meßrohrs 1.

Vorliegend ist der verbleibende Raum in dem Außengehäuse 7 nicht weiter ausgefüllt. Es kann jedoch vorteilhaft sein, diesen Raum mit einem Gießmaterial, wie Epoxi, Polyurethan oder Silikon, auszugießen. Geeignet sind dabei neben fest aushärtenden Materialien insbesondere auch solche Materialien, die im ausgehärteten Zustand schwammartig sind.

Aus Fig. 3 ist im Schnitt eine Verbindungsvorrichtung 6 für ein ansonsten nicht weiter dargestelltes magnetisch-induktives Durchflußmeßgerät gemäß einem zweiten bevorzugten Ausffümmgsbeispiel der Erfindung ersichtlich. Dabei ist die Verbindungsvorrichtung 6 von dem Meßrohr des magnetisch-induktiven Durchflußmeßgeräts gemäß dem zweite bevorzugten Ausführungsbeispiel der Erfindung getrennt ausgebildet, und zwar als kurzer Rohrabschnitt 18, der in der Innenwand 19 an seinen beiden Enden 20 jeweils mit der ebenfalls als Heizdraht ausgebildeten Heizeinrichtung 5 versehen ist. Die Verbindungsvorrichtung 6 wird dabei derart verwendet, daß von der einen Seite her das Meßrohr und von der anderen Seite her die Rohrleitung eingesteckt werden und nach Anschmelzen der Kunststoffe durch Aktivieren der Heizeinrichtungen 5 Schmelaverbindungen zwischen dem Meßrohr 1 einerseits und der Verbindungsvorrichtung 6 andererseits sowie zwischen der Rohrleitung 2 einerseits und der Verbindungsvorrichtung 6 andererseits erzielt werden. Dabei bleiben das Meßrohr und die Rohrleitung aufgrund eines in der Mitte der Verbindungsvorrichtung 6 vorgesehenen umlaufenden Rings 21 im Abstand voneinander.

## Patentansprüche

1. Durchflußmeßgerät, zur Durchflußmessung eines strömenden Mediums, mit einem Meßrohr (1) aus Kunststoff zum Führen des Mediums und einer Verbindungsvorrichtung (6) zum Verbinden eines Endes (3) des Meßrohrs (1) mit einem Ende einer Rohrleitung (2) aus Kunststoff, **dadurch gekennzeichnet, daß** die Verbindungsvorrichtung (6) eine Heizeinrichtung (5) aufweist, mittels derer das Ende (3) des Meßrohrs (1) oder/und das Ende der Rohrleitung (2) angeschmolzen werden kann bzw. können, so daß zwischen dem Meßrohr (1) und der Rohrleitung (2) eine Schmelzverbindung erzielbar ist.

2. Durchflußmeßgerät nach Anspruch 1, **dadurch gekennzeichnet, daß** das Meßrohr (1) und die Verbindungsvorrichtung (6) einstückig ausgebildet sind und die Heizeinrichtung (5) in die Innenwand (4) des Meßrohrs (1) integriert ist.

3. Durchflußmeßgerät nach Anspruch 1, **dadurch gekennzeichnet, daß** die Verbindungsvorrichtung (6) von dem Meßrohr (1) verschieden ausgebildet ist und vorzugsweise auf das Meßrohr (1) sowie auf die Rohrleitung (2) aufsteckbar ist.

4. Durchflußmeßgerät nach einem der Ansprüche 1 bis 3, **dadurch gekennzeichnet, daß** als Heizeinrichtung (5) ein Heizdraht vorgesehen ist.

5. Durchflußmeßgerät nach einem der Ansprüche 1 bis 4, **dadurch gekennzeichnet, daß** als Kunststoff des Meßrohrs (1) oder/und der Verbindungsvorrichtung (6) Polyethylen oder Polypropylen vorgesehen ist bzw. sind.

6. Verfahren zum Verbinden eines Endes (3) eines aus Kunststoff ausgebildeten Meßrohrs (1) eines Durchflußmeßgeräts mit einem Ende einer aus Kunststoff ausgebildeten Rohrleitung (2), **dadurch gekennZeichnet, daß** das Meßrohr (1) oder/und die Rohrleitung (2) mittels einer in einer Verbindungsvorrichtung (6) vorgesehenen Heizeinrichtung (5) angeschmolzen wird bzw. werden, so daß zwischen dem Meßrohr (1) und der Rohrleitung (2) eine Schmelzverbindung erzielt wird.

7. Verfahren nach Anspruch 6, **dadurch gekennzeichnet, daß** die Schmelzverbindung zwischen dem Meßrohr (1) und der Rohrleitung (2) andererseits hergestellt wird.

8. Verfahren nach Anspruch 6, **dadurch gekennzeichnet, daß** Schmelzverbindungen zwischen dem Meßrohr (1) und der Rohrleitung (2) einerseits und der Verbindungseinrichtung (6) andererseits hergestellt wird.

9. Verfahren nach einem der Ansprüche 6 bis 8, **dadurch gekennzeichnet, daß** die Verbindungseinrichtung (6) auf das Ende der Rohrleitung (2) aufgesteckt wird.
